# EUROPÄISCHE PATENTSCHRIFT

(11) **EP 0 813 270 B1**
(45) Veröffentlichungstag und Bekanntmachung des Hinweises auf die Patenterteilung: **23.10.2002**
(21) Anmeldenummer: 97108923.0
(22) Anmeldetag: 03.06.1997
(51) Int. Cl.: H01R 25/14, H02B 1/052

(54) **System aus Tragschienen**
System of support rails
Système de rails de support

(30) Priorität: 12.06.1996 DE 19623458
(43) Veröffentlichungstag der Anmeldung: 17.12.1997
(73) Patentinhaber: SIEMENS AKTIENGESELLSCHAFT, 80333 München (DE)
(72) Erfinder: Gern, Siegbert, Dipl.-Ing. (FH), 91056 Erlangen (DE)

(56) Entgegenhaltungen:
- DE-A- 2 736 079
- DE-U- 9 417 134
- FR-A- 2 303 400

## Beschreibung

Die Erfindung bezieht sich auf ein System aus Tragschienen, insbesondere Hutschienen, das aus Tragschienen unterschiedlicher Tiefe seiner Flanken, jeweils vom Tragschienenrand bis zum Tragschienenboden, besteht. Solche Systeme aus Tragschienen für elektrische Verteilungen zum Aufnehmen von Geräten sind marktüblich. Dabei werden in der Regel Tragschienen mit geringerer Tiefe für kürzere Abstände von Montagestellen und Tragschienen mit größerer Tiefe für Felder mit weiteren Montageabständen eingesetzt.

In der Gebäudesystemtechnik werden in derartigen Tragschienen auch Datenschienen eines Bussystems verlegt (DE-PS 37 32 650). Hierbei wurden die Datenschienen in ihrer Dicke jeweils der Tiefe der Tragschiene angepaßt.

Der Erfindung liegt die Aufgabe zugrunde, ein System aus Tragschienen zu entwickeln, bei dem mit Datenschienen einheitlicher Dicke gearbeitet werden kann.

Die Lösung der geschilderten Aufgabe erfolgt nach der Erfindung durch ein System aus Tragschienen nach Anspruch 1. Von den Tragschienenrändern aus sind die Flankeninnenseiten der Schienen dadurch auf gleiche Tiefe gebracht, indem auf systemeinheitlicher Tiefe ein Boden ausgebildet ist. Die selbe Tiefe bis zum systemeinheitlichen Boden ermöglicht, Datenschienen gleicher Dicke einzusetzen, da die Kontaktierung von einem aufzusetzenden Gerät in etwa vom Niveau der Schienenränder ausgeht.

Bei Ausführen der Tragschienen aus Blechen kann der Schienenboden vorteilhaft zwischen den Schienenflanken hochgezogen sein. Bei Tragschienen aus den unterschiedlichsten Materialien kann ein zusätzlicher Boden auf systemeinheitlicher Tiefe vorgesehen werden. Bei gegossenen oder stranggezogenen Tragschienen kann zwischen dem Boden auf systemeinheitlicher Tiefe und dem Schienenboden ein zugänglicher Hohlraum ausgebildet werden. Für die Montage der Tragschienen in einer Verteilung oder in einem Gerüstfeld ist es vorteilhaft, wenn der auf systemeinheitlicher Tiefe ausgebildete Boden an Montagestellen bis zum Schienenboden vertieft ist.

Die Erfindung soll nun anhand von in der Zeichnung grob schematisch wiedergegebenen Ausführungsbeispielen näher erläutert werden:
In FIG 1 ist eine Tragschiene wiedergegeben, deren Schienenboden zwischen den Schienenflanken hochgezogen ist.
In FIG 2 ist eine Tragschiene mit geringerer Tiefe an den Außenflanken, jedoch gleicher Tiefe von den Tragschienenrändern bis zum inneren Boden, als in FIG 1 dargestellt.
In FIG 3 ist eine Datenschiene wiedergegeben, die eingelegt in einer Tragschiene nach FIG 1 oder nach FIG 2 vom Tragschienenrand aus auf gleicher Tiefe liegt.
In FIG 4 ist ein anderes Ausführungsbeispiel für eine Tragschiene nach FIG 1 veranschaulicht. Hierbei ist auf systemeinheitlicher Tiefe ein zusätzlicher Boden vorgesehen und zwischen diesem Boden und dem Schienenboden ist ein zugänglicher Hohlraum ausgebildet.
In FIG 5 ist eine Tragschiene dargestellt, deren Boden auf systemeinheitlicher Tiefe an den Montagestellen bis zum Schienenboden vertieft ausgebildet ist.

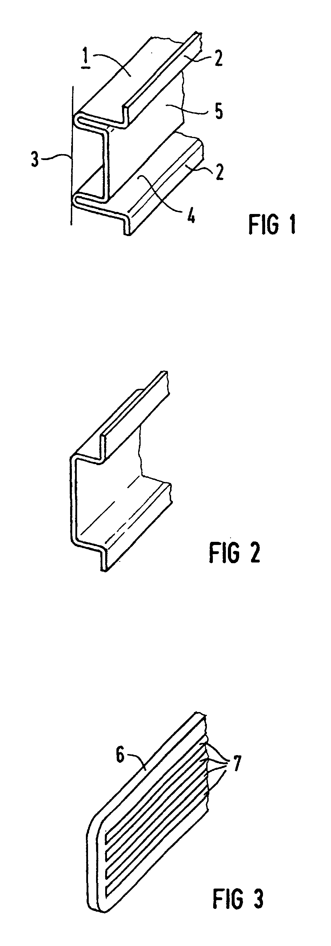

Das System aus Tragschienen, wie es durch die Tragschiene nach FIG 1 und nach FIG 2 veranschaulicht ist, besteht, anhand von FIG 1 orientiert, aus Tragschienen 1, deren Tiefe ihrer Flanken, jeweils gemessen von Tragschienenrand bis zum Tragschienenboden 3, von Tragschiene zu Tragschiene des Systems unterschiedlich ist. Von den Tragschienenrändern 2 aus sind die Flankeninnenseiten 4 der Tragschienen auf gleiche Tiefe gebracht, indem auf systemeinheitlicher Tiefe ein Boden 5 ausgebildet ist. Üblicherweise haben Tragschienen, die an ihrer Außenflanke tiefere Tragschienen, nach FIG 1, aufweisen, die äußere Gestalt der Tragschiene nach FIG 2. Die Form der Tragschiene nach FIG 1, bei der der Boden 5 auf systemeinheitlicher Tiefe zwischen den Schienenflanken hinsichtlich des Tragschienenbodens 3 hochgezogen ist, eignet sich besonders für verformbare Materialbleche. In einer Tragschiene nach FIG 1 und in einer Tragschiene nach FIG 2 kann eine Datenschiene nach FIG 3 einheitlicher Dicke eingesetzt werden. In einem Körper 6 aus Isolierstoff sind elektrische Schienen 7 für Datenübertragung angeordnet.

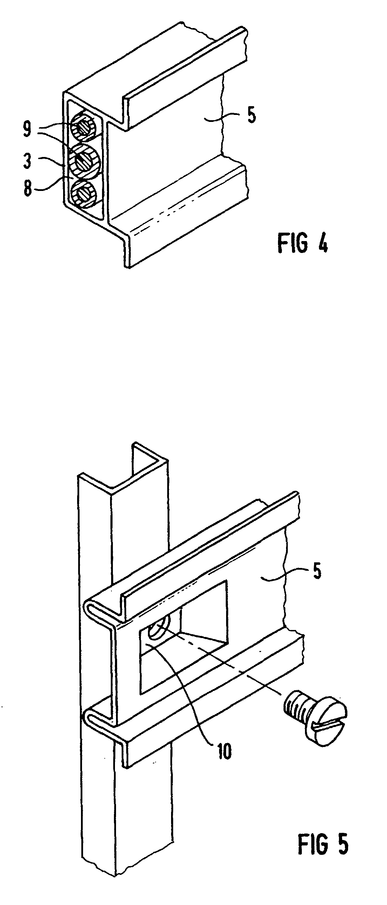

Allgemein kann der Boden 5 als zusätzlicher Boden vorgesehen sein, wie es für eine Ausgestaltung in FIG 4 veranschaulicht ist. Hierbei läßt sich zwischen dem Boden 5 auf systemeinheitlicher Tiefe und dem Schienenboden 3 ein zugänglicher Hohlraum 8 ausbilden, in dem beispielsweise Leitungen 9 untergebracht werden. Eine derartige Formgebung ist bei Materialien vorteilhaft, die stranggepreßt werden können. Es ist für die Montage der Tragschienen in einer Verteilung oder an einem Gestell eines Verteilungsfeldes vorteilhaft, wenn der Boden 5 auf systemeinheitliche Tiefe an den Montagestellen 10 in etwa bis zum Schienenboden 3 vertieft ausgebildet ist.

## Patentansprüche

1. System aus Tragschienen (1), insbesondere Hutschienen, das aus Tragschienen (1) unterschiedlicher Tiefe bezüglich seiner Flanken, jeweils vom Tragschienenrand (2) bis zum Tragschienenboden (3), besteht,
**dadurch gekennzeichnet,**
**daß** von den Tragschienenrändern (2) aus die Flankeninnenseiten (4) der Tragschienen gleiche Tiefe aufweisen, indem auf systemeinheitlicher Tiefe ein Boden (5) ausgebildet ist.

2. System nach Anspruch 1,
**dadurch gekennzeichnet,**
**daß** der Boden (5) auf systemeinheitlicher Tiefe zwischen den Schienenflanken hochgezogen ist.

3. System nach Anspruch 1,
**dadurch gekennzeichnet,**
**daß** der Boden (5) auf systemeinheitlicher Tiefe als zusätzlicher Boden vorgesehen ist.

4. System nach Anspruch 3,
**dadurch gekennzeichnet,**
**daß** zwischen dem Boden (5) auf systemeinheitlicher Tiefe und dem Tragschienenboden (3) ein zugänglicher Hohlraum (8) ausgebildet ist.

5. System nach einem der Ansprüche 1 bis 4,
**dadurch gekennzeichnet,**
**daß** der Boden (5) auf systemeinheitlicher Tiefe an Montagestellen (10) in etwa bis zum Tragschienenboden (3) vertieft ist.

## Claims

1. System comprising mounting rails (1), in particular top-hat rails, which consists of mounting rails (1) with sides of varying depths, from the edge (2) of the mounting rail to the base (3) of the mounting rail in each case, **characterised in that** the inner sides (4) of the mounting rails are the same depth from the edges (2) of the mounting rail, **in that** a base (5) is formed at a uniform depth for the whole system.

2. System according to Claim 1, **characterised in that** the base (5) is raised between the sides of the rail at a uniform depth for the whole system.

3. System according to Claim 1, **characterised in that** the base (5) is envisaged as an additional base at a uniform depth for the whole system.

4. System according to Claim 3, **characterised in that** there is an accessible hollow space (8) between the base (5) at a uniform depth for the whole system and the base (3) of the mounting rail.

5. System according to one of Claims 1 to 4, **characterised in that** the base (5) is recessed at a uniform depth for the whole system at mounting points (10) approximately as far as the base (3) of the mounting rail.

## Revendications

1. Système de rails (1) de support, notamment de profilés chapeau, qui est constitué de rails (1) de support ayant des flancs de profondeur différente, chaque fois depuis le bord (2) du rail de support jusqu'au fond (3) du rail de support,
**caractérisé en ce que** les côtés (4) intérieurs des flancs des rails de support possèdent la même profondeur à partir des bords (2) des rails de support par le fait qu'un fond (5) est formé à une profondeur système uniforme.

2. Système suivant la revendication 1, **caractérisé en ce que** le fond (5) est relevé à la profondeur système uniforme entre les flancs des rails.

3. Système suivant la revendication 1, **caractérisé en ce que** le fond (5) à la profondeur système uniforme est prévu en tant que fond supplémentaire.

4. Système suivant la revendication 3, **caractérisé en ce qu'**une cavité (8) accessible est formée entre le fond (5) à la profondeur système uniforme et le fond (3) du rail de support.

5. Système suivant l'une des revendications 1 à 4, **caractérisé en ce que** le fond (5) à la profondeur système uniforme est renfoncé en des points (10) de montage environ jusqu'au fond (3) du rail de support.
